# EUROPÄISCHE PATENTSCHRIFT

(11) **EP 1 870 614 B1**
(45) Veröffentlichungstag und Bekanntmachung des Hinweises auf die Patenterteilung: **20.10.2010**
(21) Anmeldenummer: 06012955.8
(22) Anmeldetag: 23.06.2006
(51) Int. Cl.: F16F 15/02

(54) **Aktives Schwingungsisolationssystem mit verbesserter Sensoren-/Aktorenabstimmung**
Active vibration isolation system with improved sensor/actuator correlation
Système actif d'isolation des vibrations avec une corrélation entre des decapteurs et des actionneurs améliorée

(43) Veröffentlichungstag der Anmeldung: 26.12.2007
(73) Patentinhaber: Integrated Dynamics Engineering GmbH, 65479 Raunheim (DE)
(72) Erfinder: Heiland, Peter, 65479 Raunheim (DE)
(74) Vertreter: Herden, Andreas F.

(56) Entgegenhaltungen:
- EP-A1- 0 748 951
- WO-A-98/06960
- DE-A1- 3 902 605

## Beschreibung

### Gebiet der Erfindung

Die Erfindung betrifft ein aktives Schwingungsisolationssystem, bei welchem zumindest ein Sensor zur Erfassung von Bewegungen der zu lagernden Last sowie zumindest ein Aktor zur aktiven Gegensteuerung vorgesehen ist.

### Hintergrund der Erfindung

Schwingungsisolationssysteme sind bekannt. So zeigt beispielsweise die DE 698 17 750 T2 (Erfinder Erik Loopstra, Peter Heiland) ein Schwingungsisolationssystem, welches zur Aufnahme eines Lithographiegerätes ausgebildet ist. Dabei wird die zu lagernde Last, welche typischerweise einen Tisch und darauf gelagerte Bauelemente wie Fertigungsanlagen umfasst, auf Luftlagern gelagert.

Das Dokument WO 98/06960 A zeigt einen Sensor und einen Aktor, wobei die Achse, auf der ein Aktor Kraft ausübt, parallel zu einer Sensorachse angeordnet ist. Das Dokument EP 748 951 A1 zeigt einen Aktor, der eine Kraft in die gleiche Richtung ausübt, in welcher mittels eines Sensors gemessen wird. Das Dokument DE 3902 605 A1 zeigt eine Kombination von Sensor und Aktor in einem gemeinsamen Gehäuse. Sowohl Aktor als auch Sensor beruhen auf dem Piezo-Prinzip.

Zur Verbesserung der Schwingungsisolation weisen sogenannte aktive Schwingungsisolationssysteme Sensoren und Aktoren auf, mittels denen eine gezielte Gegensteuerung möglich ist. Dabei erfassen die Sensoren Bewegungen der zu lagernden Last. Über eine Regeleinrichtung werden Aktoren des Schwingungsisolationssystems angesteuert und wirken Schwingungen, welche sowohl von außen auf das System einwirken können, als auch durch die zu lagernde Last generiert werden können, entgegen.

Insbesondere in der Halbleiterindustrie werden mit zunehmender Miniaturisierung der Bauteile die Anforderungen an derartige Schwingungsisolationssysteme immer höher,

Nachteilig an bekannten Schwingungsisolationssystemen hat sich gezeigt, dass die Signale, die von den Sensoren gemessen werden und die die Bewegungen der zu isolierenden Last wiedergeben, nicht immer vollständig mit den Signalen korrelieren, welche zum Gegensteuern der Bewegung über die Aktoren erforderlich sind.

Es ist zu vermuten, dass dieser Effekt unter anderem daher herrührt, dass die zu isolierende Last, insbesondere der Tisch, auf welchem die zu isolierenden Bauelemente angeordnet sind, als starrer Körper betrachtet wird.

Die Bewegungen des Tisches sind aber nicht an jeder Stelle gleich. So ist der Tisch kein idealer starrer Körper und unterliegt selbst Schwingungen.

Des Weiteren kann beispielsweise ein Sensor, welcher sich zwischen zwei Positionen befindet, welche entgegengesetzte Bewegungsrichtungen ausführen, keine Bewegung messen. Vielmehr gibt dieser Sensor nur dann ein Signal, wenn er auch rotatorische Bewegungen erfasst.

Ein weiterer Nachteil von bekannten Schwingungsisolationssystemen ist, dass es zwischen den Sensoren und den Aktoren zum Übersprechen kommen kann, dass sich also Sensoren und Aktoren gegenseitig stören, wodurch ebenfalls die Isolationswirkung des Systems verringert wird.

### Aufgabe der Erfindung

Der Erfindung liegt demgegenüber die Aufgabe zugrunde, ein Schwingungsisolationssystem bereitzustellen, bei welchem die vorstehend genannten Nachteile des Standes der Technik verringert werden.

Insbesondere ist Aufgabe der Erfindung, das Zusammenwirken von Sensoren und Aktoren zu verbessern.

Eine weitere Aufgabe der Erfindung ist es, eine Sensor/Aktorkombination bereitzustellen, bei welcher das Ausgangssignal des Sensors möglichst genau mit dem Eingangssignal des Aktors korreliert.

Eine weitere Aufgabe der Erfindung ist es, ein Übersprechen zwischen Sensoren und Aktoren zu verringern.

### Zusammenfassung der Erfindung

Die Aufgabe der Erfindung wird bereits durch ein aktives Schwingungsisolationssystem nach dem unabhängigen Anspruch 1 gelöst.

Bevorzugte Ausführungsformen und Weiterbildungen der Erfindung sind den jeweiligen Unteransprüchen zu entnehmen.

Danach ist ein aktives Schwingungsisolationssystem vorgesehen, welches zumindest einen Sensor zur Erfassung von Bewegungen aufweist. Bei den Bewegungen handelt es sich insbesondere um Schwingungen, welche sowohl durch externe Einflüsse wie seismische Erschütterungen als auch durch die zu isolierende Masse selbst, etwa aufgrund der Bewegung von Maschinenelementen, in das System eingekoppelt werden.

Der Sensor erfasst Bewegungen entlang und/oder um zumindest eine erste Achse. Es handelt sich also um einen Sensor, der translatorische Bewegungen und/oder Rotationsbewegungen erfasst. Eine Achse des Sensors wird dadurch definiert, dass diese Achse in Bezug auf eine Translationsbewegung, in welcher der Sensor wirksam ist, im Wesentlichen in Bewegungsrichtung verläuft, beziehungsweise die Achse bei einem Sensor, der Rotationsbewegungen erfasst, im Wesentlichen parallel zur Achse der Rotationsbewegung verläuft.

Weiter weist das aktive Schwingungsisolationssystem zumindest einen Aktor zur aktiven Steuerung einer zu isolierenden Last auf. Auch dieser Aktor kann sowohl als translatorischer Aktor, beispielsweise als Linearmotor ausgebildet sein. Es kann sich auch um einen Aktor handeln, welcher ein Drehmoment auf das System beziehungsweise die zu isolierende Last ausübt. Diesem Aktor ist entsprechend der Definition des Sensors eine zweite Achse zugeordnet. Der Aktor kann also zumindest in eine Richtung wirksam sein und/oder ein Drehmoment erzeugen. Über die Richtung oder die Drehachse ist die Wirkachse des Aktors definiert.

Gemäß der Erfindung liegt die dem Sensor zugeordnete Achse im Wesentlichen parallel zu der Achse, welche dem Aktor zugeordnet ist. Durch die Ausrichtung der beiden Achsen, welche auch als Wirkachsen bezeichnet werden können, wird erreicht, dass insbesondere aufgrund der zu isolierende Last, die nicht als idealer starrer Körper ausgebildet ist, auftretende Störungen der Korrelation zwischen Sensorsignal und Aktorensignal reduziert werden.

Gemäß der Erfindung ist die erste Achse weniger als 15 cm, vorzugsweise weniger als 5 cm und besonders bevorzugt weniger als 3 cm von der zweiten Achse beabstandet. Die Wirkachse des Sensors liegt also möglichst nahe an der Wirkachse des Aktors.

Idealerweise, wie es bei einer bevorzugten Ausführungsform der Erfindung vorgesehen ist, liegen die beiden Achsen im Wesentlichen aufeinander.

Der Winkel der ersten zur zweiten Achse, welche im Wesentlichen parallel liegen, liegt bei unter 15°, bevorzugt unter 8° und besonders bevorzugt unter 3°.

Bei einer Weiterbildung der Erfindung ist zumindest ein Sensor des Schwingungsisolationssystems zur Erfassung von Bewegungen in zumindest einem Rotationsfreiheitsgrad und zumindest einem Translationsfreiheitsgrad ausgebildet, wobei die Achse des Rotationsfreiheitsgrades im Wesentlichen mit der Richtung des Translationsfreiheitsgrades übereinstimmt. Der Sensor misst also zwei Freiheitsgrade, deren Wirkachsen übereinander liegen. Vorzugsweise wird der Sensor mit einem Aktor kombiniert, welcher ebenfalls in einem Rotationsfreiheitsgrad und einem Translationsfreiheitsgrad wirksam ist.

Bei einer Weiterbildung der Erfindung weist das Schwingungsisolationssystem zumindest zwei, vorzugsweise drei Sensoren mit jeweils zugeordneten Aktoren auf, deren Achsen im Wesentlichen parallel liegen. Handelt es sich dabei um Aktor-/Sensorkombinationen, welche jeweils in einem Rotationsfreiheitsgrad und einem Translationsfreiheitsgrad wirksam ist, ist es möglich, ein System bereitzustellen, welches in allen sechs Freiheitsgraden eine aktive Regelung bereitstellt.

Um keine Schwingungen, insbesondere seismische Schwingungen in das System einzukoppeln, greifen die Aktoren vorzugsweise berührungslos an der zu isolierenden Last an.

Aktor und Sensor sind vorzugsweise durch eine im Wesentlichen starre Verbindung miteinander gekoppelt. So werden Korrelationsabweichungen zwischen Sensorsignal und nötiger Aktorensteuerung verringert.

Das Schwingungsisolationssystem weist vorzugsweise eine aktive Regelung in zumindest zwei, vorzugsweise drei Translationsfreiheitsgraden auf und ermöglicht so eine Isolationswirkung in alle drei Raumrichtungen.

Bei einer Weiterbildung der Erfindung ist das Schwingungsisolationssystem zur aktiven Regelung in Bezug auf zumindest einen, vorzugsweise zwei und besonders bevorzugt drei Rotationsfreiheitsgrade ausgebildet.

Bei einer weiteren bevorzugten Ausführungsform der Erfindung sind Sensor und zugeordneter Aktor in einem Gehäuse angeordnet. So wird eine kompakte Sensor/Aktorkombination bereitgestellt, welche neben der kompakten Bauweise und einfachen Integration in das System, auch nachträglich in bestehende Systeme, optimal aufeinander abgestimmt ist.

Die Erfindung betrifft des Weiteren ein Schwingungsisolationssystem, welches zumindest einen Sensor zur Erfassung von Bewegungen, insbesondere von Schwingungen in zumindest einem Freiheitsgrad und zumindest einen Aktor zur aktiven Steuerung einer zu isolierenden Last in zumindest dem Freiheitsgrad des Sensors umfasst.

Aktor und Sensor gemäß der Erfindung sind weniger als 25 cm, vorzugsweise weniger als 10 cm und besonders bevorzugt weniger als 5 cm voneinander beabstandet.

Sensor und Aktor liegen also möglichst nahe beieinander, um Korrelationsabweichungen des Sensorsignals mit der Aktorensteuerung zu verringern.

Vorzugsweise sind Sensor und Aktor nicht nur möglichst nahe beieinander angeordnet, sondern haben auch eine gemeinsame Wirkachse.

Als Sensoren werden auf magnetischem, elektrostatischem oder Piezoprinzip arbeitenden Sensoren verwendet, insbesondere sind induktiv arbeitende Geophone vorgesehen.

Auch die Aktoren arbeiten auf einem Magnet-, Piezo- oder elektrostatischem Prinzip. Insbesondere ist die Verwendung von elektromagnetischen Antrieben, vorzugsweise berührungslos angreifenden Antrieben, wie Lorentz-Motoren vorgesehen.

Gemäß der Erfindung wird ein Aktor verwendet, welcher auf einem anderen Prinzip basiert als der Sensor. So wird ein Übersprechen zwischen Aktor und Sensor weitgehend vermieden.

Vorzugsweise werden Piezo- oder elektrostatische Sensoren verwendet, während der Aktor als Magnetaktor ausgebildet ist. Es kann so eine Sensor-/Aktor-Kombination bereitgestellt werden, bei welcher Aktor und Sensor nahe beieinander, insbesondere in einem Gehäuse angeordnet werden können und es kaum zum Übersprechen zwischen den beiden Bauteilen kommt.

Der Sensor ist vorzugsweise als Piezo- oder elektrostatischer Sensor ausgebildet, wohingegen der Aktor als Magnetaktor, insbesondere als berührungsloser Lorentz-Motor ausgebildet ist.

### Kurzbeschreibung der Zeichnungen

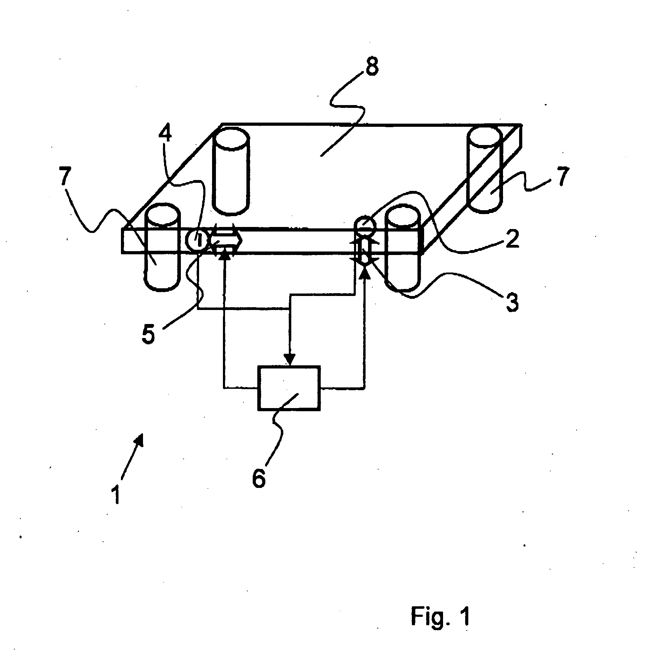

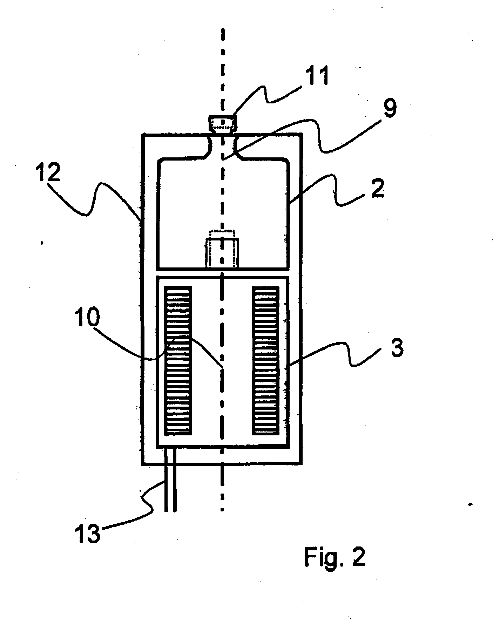

Die Erfindung soll im Folgenden anhand der Zeichnungen Fig. 1 und Fig. 2 näher erläutert werden.
- Fig. 1: zeigt eine schematische Ansicht eines Ausführungsbeispiels eines Schwingungsisolationssystems,
- Fig. 2: zeigt schematisch ein Ausführungsbeispiel einer Aktor-/Sensor-Kombination.

### Detaillierte Beschreibung der Zeichnungen

Bezug nehmend auf Fig. 1 sollen die wesentlichen Bestandteile eines Ausführungsbeispiels eines Schwingungsisolationssystems 1 näher erläutert werden.

Das Schwingungsisolationssystem 1 umfasst eine Platte 8, welche auf Luftlagern 7 schwingungsisoliert gelagert ist. Auf der Platte 8 können die schwingungsisoliert zu lagernden Bauteile oder Maschinenelemente (nicht dargestellt) angeordnet werden, so dass diese zusammen mit der Platte 8 die zu isolierende Last bilden.

Das Schwingungsisolationssystem 1 ist als aktives Schwingungsisolationssystem ausgebildet und umfasst eine Regeleinrichtung 6, welche mit Sensoren 2, 4 verbunden ist. Die Sensoren 2, 4 erfassen Bewegungen, insbesondere Schwingungen der Platte 8 und geben das Signal an die Regeleinrichtung 6 weiter. Die Regeleinrichtung 6 berechnet anhand der Eingangssignale Kompensationssignale und gibt diese Kompensationssignale an die Aktoren 3, 5 weiter. Über die Aktoren 3, 5 wird so Bewegungen der Platte 8 entgegengewirkt.

Um ein optimales Zusammenwirken von Sensoren und Aktoren zu erreichen, sind in diesem Ausführungsbeispiel Sensor-/Aktor-Kombinationen vorgesehen, bei denen jeweils Sensor und Aktor 2, 3; 4, 5 nahe beieinander liegen. Für die Regelung in vertikaler Richtung ist eine eigene Sensor-/Aktor-Kombination 2, 3 vorgesehen. Der Sensor 2 erfasst Bewegungsänderungen in vertikaler Richtung, besitzt also eine vertikale Wirkachse.

Dem Sensor 2 ist ein Aktor 3 zugeordnet, welcher ebenfalls in vertikaler Richtung wirksam ist. Sensor 2 und Aktor 3 haben somit die gleiche Wirkachse und liegen nahe beieinander.

Gleiches gilt für die Sensor-/Aktor-Kombination 4, 5, welche für die Regelung des Systems in einer horizontalen Richtung vorgesehen ist.

Eine dritte Sensor-/Aktor-Kombination, welche senkrecht zu den zuvor beschriebenen Sensor-Aktoren-Kombinationen steht und die es ermöglicht, das System in alle drei Raumrichtungen zu regeln, ist in der Zeichnung nicht dargestellt.

Um ein Übersprechen zwischen Aktoren 3, 5 und Sensoren 2, 4 möglichst gering zu halten oder sogar völlig zu vermeiden, ist jeweils ein Piezo-Sensor 2, 4 mit einem Magnetaktor 3, 5 kombiniert.

Bezug nehmend auf Fig. 2 sollen die wesentlichen Komponenten einer Sensor-/Aktor-Kombination näher erläutert werden. In diesem Ausführungsbeispiel sind ein Sensor 2 und ein Aktor 3 gemeinsam in einem Gehäuse 12 untergebracht. Das Gehäuse 12, welches vorzugsweise im Wesentlichen aus Metall ausgebildet ist, stellt eine im Wesentliche starre Verbindung von Aktor 2 und Sensor sicher.

Bei dem Aktor 2 handelt es sich um einen Piezo-Aktor, welcher über eine BNC-Buchse 11 an einer Regeleinrichtung (nicht dargestellt) angeschlossen werden kann.

Bei dem Aktor 3 handelt es sich um einen Magnetaktor in Form eines Linearmotors, welcher ebenfalls einen Anschluss 13 zum Anschließen an einer Regeleinrichtung (nicht dargestellt) aufweist. Die Sensor-/Aktor-Kombination in diesem Beispiel ist zur aktiven Regelung von vertikalen Bewegungen, also Tranlationsbewegungen entlang der Achsen 10, 11 ausgebildet.

Die Achse in der Richtung, in der der Sensor wirksam ist, die erste Achse 9, stimmt mit der Achse, in deren Richtung der Aktor Kraft ausübt, der zweiten Achse 10, überein. Das Sensorsignal korreliert daher im Wesentlichen genau mit dem Kompensationssignal für den Aktor 2.

Es versteht sich, dass die Erfindung nicht auf eine Kombination vorstehend beschriebener Merkmale beschränkt ist, sondern dass der Fachmann die Merkmale vielmehr, soweit sinnvoll, kombinieren wird.

### Bezugszeichenliste

- 1: Schwingungsisolationssystem
- 2: Sensor
- 3: Aktor
- 4: Sensor
- 5: Aktor
- 6: Regeleinrichtung
- 7: Luftlager
- 8: Platte
- 9: erste Achse
- 10: zweite Achse
- 11: BNC-Buchse
- 12: Gehäuse
- 13: Anschluss

## Patentansprüche

1. Aktives Schwingungsisolationssystem, umfassend zumindest einen Sensor zur Erfassung von Bewegungen, insbesondere von Schwingungen, entlang und/oder um zumindest eine erste Achse, und
zumindest einen Aktor zur aktiven Steuerung einer zu isolierenden Last in Richtung und/oder um zumindest eine zweiten Achse,
**dadurch gekennzeichnet, dass**
die erste und die zweite Achse im Wesentlichen parallel und weniger als 15 cm voneinander beabstandet liegen, wobei der zumindest eine Sensor und der zumindest eine Aktor weniger als 25 cm voneinander beabstandet sind, wobei der zumindest eine Sensor und der zumindest eine Aktor auf einem Magnet-, Piezo- oder elektrostatischem Prinzip basiert und der Aktor auf einem anderem Prinzip basiert als der Sensor.

2. Aktives Schwingungsisolationssystem nach Anspruch 1,
**dadurch gekennzeichnet, dass** die erste Achse weniger als weniger als 5 cm und bevorzugt weniger als 3 cm von der zweiten Achse beabstandet ist.

3. Aktives Schwingungsisolationssystem nach einem der vorstehenden Ansprüche, **dadurch gekennzeichnet, dass** der Winkel zwischen der ersten und zweiten Achse weniger als 15°, bevorzugt weniger als 8° und besonders bevorzugt weniger als 3° beträgt.

4. Aktives Schwingungsisolationssystem nach einem der vorstehenden Ansprüche, **dadurch gekennzeichnet, dass** der Sensor zur Erfassung von Bewegungen in zumindest einem Rotationsfreiheitsgrad und zumindest einem Translationsfreiheitsgrad ausgebildet ist, wobei die Achse des Rotationsfreiheitsgrades im Wesentlichen mit der Richtung des Translationsfreiheitsgrades übereinstimmt.

5. Aktives Schwingungsisolationssystem nach einem der vorstehenden Ansprüche, **dadurch gekennzeichnet, dass** das Schwingungsisolationsystem zumindest zwei, vorzugsweise zumindest drei Sensoren mit jeweils zugeordneten Aktoren aufweist, deren Achsen jeweils im Wesentlichen parallel liegen.

6. Aktives Schwingungsisolationssystem nach einem der vorstehenden Ansprüche, **dadurch gekennzeichnet, dass** der oder die Aktoren berührungslos an der zu isolierenden Last angreifen.

7. Aktives Schwingungsisolationssystem nach einem der vorstehenden Ansprüche, **dadurch gekennzeichnet, dass** der zumindest eine Aktor und der zumindest eine Sensor durch eine im Wesentlichen starre Verbindung miteinander verbunden sind.

8. Aktives Schwingungsisolationssystem nach einem der vorstehenden Ansprüche, **dadurch gekennzeichnet, dass** das Schwingungsisolationssystem eine aktive Regelung in zumindest zwei, vorzugsweise drei Translationsfreiheitsgraden aufweist.

9. Aktives Schwingungsisolationssystem nach einem der vorstehenden Ansprüche, **dadurch gekennzeichnet, dass** das Schwingungsisolationssystem eine aktive Regelung in zumindest einem, vorzugsweise zwei und besonders bevorzugt drei Rotationsfreiheitsgraden aufweist.

10. Aktives Schwingungsisolationssystem nach einem der vorstehenden Ansprüche, **dadurch gekennzeichnet, dass** ein Sensor und ein zugeordneter Aktor jeweils in einem Gehäuse angeordnet sind.

11. Aktives Schwingungsisolationssystem nach einem der vorstehenden Ansprüche,
**dadurch gekennzeichnet, dass**
der zumindest eine Aktor und der zumindest eine Sensor weniger als 10 cm, bevorzugt weniger als 5 cm voneinander beabstandet sind.

12. Aktives Schwingungsisolationssystem nach einem der vorstehenden Ansprüche, **dadurch gekennzeichnet, dass** der Sensor als Piezo- oder elektrostatischer Sensor ausgebildet ist und der Aktor als Magnetaktor ausgebildet ist.

## Claims

1. Active vibration isolation system comprising at least one sensor for detecting movements, in particular vibrations, along and/or around at least one first axis, and
at least one actuator for active control of a load to be isolated in the direction of and/or around at least one second axis,
**characterised in that**
the first and the second axes lie essentially in parallel and spaced less than 15cm apart from each other,
wherein the at least one sensor and the at least one actuator are spaced less than 25cm apart from each other,
wherein the at least one sensor and the at least one actuator are based on a magnetic, piezo or electrostatic principle, and the actuator is based on a different principle than the sensor.

2. Active vibration isolation system as claimed in claim 1, **characterised in that** the first axis is spaced less than 5cm and preferably less than 3cm apart from the second axis.

3. Active vibration isolation system as claimed in any one of the preceding claims, **characterised in that** the angle between the first and second axes is less than 15°, preferably less than 8° and particularly preferably less than 3°.

4. Active vibration isolation system as claimed in any one of the preceding claims, **characterised in that** the sensor is formed for detecting movements in at least one degree of rotational freedom and at least one degree of translational freedom, wherein the axis of the degree of rotational freedom substantially coincides with the direction of the degree of translational freedom.

5. Active vibration isolation system as claimed in any one of the preceding claims, **characterised in that** the vibration isolation system has at least two, preferably at least three sensors with respectively allocated actuators, the axes of which in each case lie essentially in parallel.

6. Active vibration isolation system as claimed in any one of the preceding claims, **characterised in that** the actuator(s) engage in a contact-free manner the load to be isolated.

7. Active vibration isolation system as claimed in any one of the preceding claims, **characterised in that** the at least one actuator and the at least one sensor are connected to each other by a substantially rigid connection.

8. Active vibration isolation system as claimed in any one of the preceding claims, **characterised in that** the vibration isolation system has an active control in at least two, preferably three degrees of translational freedom.

9. Active vibration isolation system as claimed in any one of the preceding claims, **characterised in that** the vibration isolation system has an active control in at least one, preferably two and particularly preferably three degrees of rotational freedom.

10. Active vibration isolation system as claimed in any one of the preceding claims, **characterised in that** a sensor and an associated actuator are disposed in each case in a housing.

11. Active vibration isolation system as claimed in any one of the preceding claims, **characterised in that** the at least one actuator and the at least one sensor are spaced less than 10cm, preferably less than 5cm apart from each other.

12. Active vibration isolation system as claimed in any one of the preceding claims, **characterised in that** the sensor is formed as a piezo or electrostatic sensor and the actuator is formed as a magnetic actuator.

## Revendications

1. Système actif d'isolation de vibrations, comprenant au moins un capteur pour la détection de mouvements, en particulier de vibrations, le long et/ou autour d'au moins un premier axe, et
au moins un actionneur pour la commande active d'une charge à isoler en direction et/ou autour d'au moins un second axe,
**caractérisé en ce que**
le premier et le second axe sont disposés sensiblement en parallèle et espacés de moins de 15 cm l'un de l'autre,
le, au moins un, capteur et le, au moins un, actionneur étant espacés de moins de 25 cm l'un de l'autre,
le, au moins un, capteur et le, au moins un, actionneur étant basés sur un principe magnétique, piézoélectrique ou électrostatique et l'actionneur étant basé sur un autre principe que le capteur.

2. Système actif d'isolation de vibrations selon la revendication 1, **caractérisé en ce que** le premier axe est espacé de moins de 5 cm et de préférence de moins de 3 cm du second axe.

3. Système actif d'isolation de vibration selon l'une quelconque des revendications précédentes, **caractérisé en ce que** l'angle entre les premier et second axes est inférieur à 15°, de préférence inférieur à 8° et avantageusement inférieur à 3°.

4. Système actif d'isolation de vibrations selon l'une quelconque des revendications précédentes, **caractérisé en ce que** le capteur pour la détection de mouvements est conçu dans au moins un degré de liberté de rotation et au moins un degré de liberté de translation, l'axe du degré de liberté de rotation coïncidant sensiblement avec la direction du degré de liberté de translation.

5. Système actif d'isolation de vibration selon l'une quelconque des revendications précédentes,
**caractérisé en ce que** le système d'isolation de vibrations présente au moins deux, de préférence au moins trois capteurs présentant des actionneurs respectivement attribués, dont les axes sont sensiblement parallèles.

6. Système actif d'isolation de vibrations selon l'une quelconque des revendications précédentes, **caractérisé en ce que** le ou les actionneurs s'appliquent sans contact sur la charge à isoler.

7. Système actif d'isolation de vibrations selon l'une quelconque des revendications précédentes, **caractérisé en ce que** le, au moins un, actionneur et le, au moins un, capteur sont reliés l'un à l'autre par une liaison sensiblement rigide.

8. Système actif d'isolation de vibrations selon l'une quelconque des revendications précédentes, ledit système d'isolation de vibrations étant **caractérisé en ce qu'**il présente un réglage actif dans au moins deux, de préférence trois degrés de liberté de translation.

9. Système actif d'isolation de vibrations selon l'une quelconque des revendications précédentes, ledit système d'isolation de vibrations étant **caractérisé en ce qu'**il présente un réglage actif dans au moins un, de préférence deux et avantageusement trois degrés de liberté de rotation.

10. Système actif d'isolation de vibrations selon l'une quelconque des revendications précédentes, **caractérisé en ce qu'**un capteur et un actionneur attribué sont disposés respectivement dans un boîtier.

11. Système actif d'isolation de vibrations selon l'une quelconque des revendications précédentes,
**caractérisé en ce que**
le, au moins un, actionneur et le, au moins un, capteur sont espacés de moins de 10 cm, de préférence de moins de 5 cm l'un de l'autre.

12. Système actif d'isolation de vibrations selon l'une quelconque des revendications précédentes,
**caractérisé en ce que** le capteur est conçu sous forme de capteur piézoélectrique ou électrostatique et l'actionneur sous forme d'actionneur magnétique.
